# EUROPÄISCHE PATENTSCHRIFT

(11) **EP 2 570 656 B1**
(45) Veröffentlichungstag und Bekanntmachung des Hinweises auf die Patenterteilung: **04.05.2016**
(21) Anmeldenummer: 11007613.0
(22) Anmeldetag: 19.09.2011
(51) Int. Cl.: F03D 1/06

(54) **Windenergieanlagenrotorblatt mit einer dicken Profilhinterkante**
Wind energy assembly rotor blade with a thick profile trailing edge
Pale de rotor d'éolienne dotée d'un bord de fuite à profil épais

(43) Veröffentlichungstag der Anmeldung: 20.03.2013
(73) Patentinhaber: Nordex Energy GmbH, 22419 Hamburg (DE)
(72) Erfinder: Fischer, Gunter Reinald, 22081 Hamburg (DE)
(74) Vertreter: Hauck Patentanwaltspartnerschaft mbB

(56) Entgegenhaltungen:
- WO-A2-2008/035149
- DE-A1- 10 340 978
- DE-A1-102008 003 188
- US-A1- 2008 187 442
- US-A1- 2011 142 665

## Beschreibung

Die Erfindung betrifft ein Windenergieanlagenrotorblatt mit einem aerodynamischen Profil, das in einem Längsabschnitt des Rotorblatts ausgebildet ist und eine Druckseite, eine Saugseite, eine Profilnasenkante und eine Profilhinterkante mit einer Dicke von 3 mm oder mehr aufweist.

Unter aerodynamischen Gesichtspunkten sind Windenergieanlagenrotorblätter mit dünnen Hinterkanten, also mit im Profil spitz zusammenlaufenden Druck- und Saugseiten optimal. Aus strukturellen Gründen sind jedoch insbesondere bei Windenergieanlagen mit horizontaler Achse im Bereich kleiner Radien, also nahe einer Rotorachse, sehr große relative Profildicken erforderlich. Insbesondere wird nur bei großen Profildicken eine ausreichende Biegehöhe erreicht, um eine hinreichende Festigkeit der Rotorblätter zu gewährleisten. Damit es bei großen relativen Profildicken nicht zu Strömungsablösungen kommt, werden sogenannte dicke Profilhinterkanten verwendet. Diese finden sich insbesondere im Bereich kleiner Radien bei nahezu allen modernen Windenergieanlagen.

Bei größeren Radien, d.h. in größerem Abstand von der Rotorachse, können dicke Profilhinterkanten in der Regel nicht mehr erfolgreich eingesetzt werden, weil wegen der dort größeren Strömungsgeschwindigkeiten zwei negative Effekte auftreten. Einerseits wird die Luft durch die dicke Profilhinterkante hinter dem Profil in eine Karmansche Wirbelstraße gezwungen, die mit einer charakteristischen Frequenz schwingt und dabei sogenannten Hinterkantenlärm erzeugt. Der Schalldruck dieses Lärms erhöht sich mit der Dicke der Profilhinterkante. Andererseits entsteht wegen Strömungsablösungen an den druck- und saugseitigen Enden der Hinterkante ein Rezirkulationsgebiet hinter der Profilhinterkante, in dem lediglich der Umgebungsdruck herrscht. Dieser sorgt für einen Sog entgegen der Strömungsrichtung, der zu einem erhöhten Druckwiderstand des Windenergieanlagenrotorblatts führt. Dadurch verschlechtert sich die aerodynamische Leistungsfähigkeit des Rotorblatts.

Aus der Druckschrift EP 2 063 106 A1 ist ein Windenergicanlagenrotorblatt bekannt geworden, bei dem an einer dicken Profilhinterkante ein zusätzliches scharfkantiges Profil oder eine Platte mit in Längsrichtung des Rotorblatts konstantem Querschnitt angeordnet ist. Das scharfkantige Profil soll die effektive Dicke der Profilhinterkante annähernd auf Null reduzieren. Bei der Variante mit einer Platte soll diese zwischen unterer und oberer Halbschale des Rotorblatts eingefügt werden. Dadurch soll den Wirbelablösungen der Strömungen von Druck- und Saugseite entgegengewirkt werden.

Aus der Druckschrift EP 1 775 464 A2 ist ein Windenergieanlagenrotorblatt bekannt geworden, bei dem an einer dünnen Profilhinterkante eine Reihe von Borsten angeordnet ist. Durch die Borsten sollen Druckschwankungen auf den beiden Seiten des Profils ausgeglichen und damit einer Geräuschentwicklung entgegengewirkt werden. Eine vergleichbare Anordnung von Borsten an einer dünnen Profilhinterkante an einem Windenergieanlagenrotorblatt zeigt auch die Druckschrift DE 10 2008 003 188 A1. Das in der Druckschrift gezeigte Rotorblatt hat entlang einer dünnen Hinterkante angeordnete Borsten, die stets parallel zueinander angeordnet sind.

Druckschrift US 2008/187442 A1 zeigt ein Windenergieanlagenrotorblatt mit einer separat gefertigten Endkante, an deren hinterem Ende in zwei Ausführungsbeispielen eine Reihe von Borsten angeordnet ist.

Davon ausgehend ist es die Aufgabe der Erfindung, ein Windenergieanlagenrotorblatt dahingehend zu verbessern, dass ein aerodynamisches Profil mit einer dicken Profilhinterkante auch bei größeren Radien sinnvoll eingesetzt werden kann.

Diese Aufgabe wird gelöst durch das Windenergicanlagenrotorblatt mit den Merkmalen des Anspruchs 1. Vorteilhafte Ausgestaltungen sind in den sich anschließenden Unteransprüchen angegeben.

Das Windenergieanlagenrotorblatt hat ein aerodynamisches Profil, das in einem Längsabschnitt des Rotorblatts ausgebildet ist, und eine Druckseite, eine Saugseite, eine Profilnasenkante und eine Profilhinterkante mit einer Dicke von 3 mm oder mehr. Das Windenergieanlagenrotorblatt hat außerdem eine Vielzahl von an der Profilhinterkante angeordneten Borsten, die in einer saugseitigen Reihe und in einer druckseitigen Reihe angeordnet sind, wobei die saugseitige Reihe eine aerodynamische Fläche bildet, die die Saugseite glatt fortsetzt, und die druckseitige Reihe eine aerodynamische Fläche bildet, die die Druckseite glatt fortsetzt.

Das Windenergieanlagenrotorblatt ist insbesondere vorgesehen für einen Rotor mit horizontaler Achse. Es kann aus einem faserverstärkten Kunststoffinaterial gefertigt sein, insbesondere aus zwei miteinander verbundenen Halbschalen. Es kann eine Blattwurzel aufweisen zur Verbindung mit einer Rotomabe, wozu es insbesondere mit einem Befestigungsflansch an der Blattwurzel versehen sein kann. Es kann eine Länge von beispielsweise 20 m, 30 m, 40 m oder mehr aufweisen. Druckseite und Saugseite erstrecken sich jeweils auf einer Ober- bzw. Unterseite des Windenergieanlagenrotorblatts von der Pröfilnasenkante bis zur Profilhinterkante.

Bei Windenergieanlagenrotorblättern mit einer dünnen Hinterkante ist ein möglichst scharfkantiges Zusammenlaufen der Druckseite und der Saugseite wünschenswert. Fertigungstechnisch bedingt weisen die Profilhinterkanten derartiger Rotorblätter dennoch eine gewisse Dicke auf, häufig im Bereich von 1 mm bis 2 mm. Profile mit einer dickeren Hinterkante können als Profile mit dicker Profilhinterkante bezeichnet werden.

Die Profilhinterkante in dem Längsabschnitt des Rotorblatts, in dem das aerodynamische Profil angeordnet ist, ist eine solche dicke Profilhinterkante. Die Dicke dieser Profilhinterkante beträgt mindestens 3 mm, kann jedoch auch wesentlich größer sein und beispielsweise 5 mm, 10 mm, 20 mm, 50 mm, 100 mm oder mehr betragen.

Die Borsten können eine langgestreckte Form aufweisen. Sie weisen außerdem eine Elastizität auf, die so groß ist, dass sie in Abhängigkeit von den Strömungsverhältnissen eine von ihrer Ruhelage abweichende Position einnehmen können.

Die Borsten sind in zwei Reihen angeordnet, die im Wesentlichen in Längsrichtung des Windenergieanlagenrotorblatts verlaufen können. Eine dieser Reihen wird als saugseitige Reihe, die andere als druckseitige Reihe bezeichnet. Innerhalb der Reihen können die Borsten einen relativ geringen Abstand voneinander aufweisen oder sogar unmittelbar aneinander angrenzen. In jedem Fall sind die Abstände zwischen den Borsten und die Abmessungen der Borsten so bemessen, dass die in Reihen angeordneten Borsten in ihrer Gesamtheit im Betrieb des Rotorblatts jeweils wie eine aerodynamische Fläche wirken. Insbesondere kann die Strömung entlang dieser Flächen glatt abströmen.

Dass die beiden aerodynamischen Flächen die Saugseite bzw. die Druckseite glatt fortsetzen, heißt, dass sich die aerodynamischen Flächen im Bereich der Profilhinterkante an die Saugseite bzw. an die Druckseite anschließen, so dass die Strömung an der Druckseite entlang der von der druckseitigen Reihe gebildeten aerodynamischen Fläche abströmen kann und die Strömung an der Saugseite entlang der von der saugseitigen Reihe gebildeten aerodynamischen Fläche abströmen kann. Hierzu müssen einerseits die Orientierungen der Druckseite bzw. der Saugseite und der diese fortsetzenden aerodynamischen Flächen im Bereich nahe der Profilhinterkante im Wesentlichen einander entsprechen. Außerdem sollte zwischen der Druck- bzw. der Saugseite und der diese jeweils fortsetzenden aerodynamischen Fläche keine Stufe ausgebildet sein, die zu stärkeren Strömungsablösungen oder Verwirbelungen führt. Allerdings sind kleinere Stufen und auch kleinere Abweichungen in der Orientierung der jeweils aneinandergrenzenden Flächen akzeptabel, soweit unter normalen Einsatzbedingungen ein im Wesentlichen glattes Abströmen über die von den Borsten gebildeten aerodynamischen Flächen erfolgen kann.

Der Längsabschnitt des Rotorblatts, in dem das besondere aerodynamische Profil ausgebildet ist, kann eine Länge von beispielsweise 5%, 10%, 25%, 50% oder mehr der Gesamtlänge des Rotorblatts aufweisen: Der Längsabschnitt kann in einem Abstand von der Blattwurzel und/oder in einem Abstand von der Blattspitze ausgebildet sein. Insbesondere kann sich der Längsabschnitt in einem mittleren Bereich des Windenergieanlagenrotorblatts befinden. Es können auch mehrere Längsabschnitte über die Länge des Rotorblatts verteilt an unterschiedlichen Radiuspositionen angeordnet sein.

Hinsichtlich seiner aerodynamischen Wirkung kann das Profil einschließlich der von den Borsten gebildeten aerodynamischen Flächen derjenigen eines herkömmlichen Profils mit einer dünnen Hinterkante entsprechen. Dies gilt insbesondere im regulären Betrieb der Windenergieanlage, wenn das aerodynamische Profil von vorn angeströmt wird. In diesem Fall kann die Strömung auf Druckseite und Saugseite des Profils sauber über die von den Borsten gebildeten aerodynamischen Flächen abströmen. Dabei wird der bei herkömmlichen Profilen mit dicker Hinterkante beobachtete Hinterkantenlärm vermieden oder zumindest erheblich reduziert. Da die auf diese Weise von den Borsten ausgebildete Hinterkante wegen der Vielzahl der Borsten fein aufgelöst ist, kann die Geräuschentwicklung unter Umständen sogar gegenüber einer herkömmlichen dünnen Hinterkante reduziert werden. Auch der mit herkömmlichen dicken Profilhinterkanten einhergehende erhöhte Druckwiderstand kann vermieden oder erheblich reduziert werden.

Gleichzeitig werden durch die Verwendung der Borsten in der erfindungsgemäßen Anordnung die strukturellen Vorteile einer dicken Profilhinterkante erreicht. So verringert sich durch die Verwendung der Borsten, die eine gewisse Flexibilität aufweisen, die effektive Profiltiefe bei einer Anströmung des Rotorblatts von der Druckseite oder von der Saugseite aus, etwa bei extremen Böen, weil die Borsten von ihrer Ruhestellung ausgelenkt werden und nicht mehr als aerodynamische Fläche wirken. Im Vergleich zu einem Profil mit spitzer Hinterkante können dadurch die Extremlasten bei Böen und vom Normalfall abweichenden Strömungsrichtungen reduziert werden. Dies ermöglicht ein besseres Verhältnis aus Festigkeit und Gewicht des Rotorblatts.

In einer Ausgestaltung beträgt die Dicke der Profilhinterkante weniger als 10 cm. Wie bereits erläutert, finden bei herkömmlichen Windenergieanlagenrotorblättern im Bereich sehr kleiner Radien regelmäßig Profile mit dicker Profilhinterkante Verwendung, wobei die Dicke der Profilhinterkanten nahe der Blattwurzel beispielsweise 50 cm oder mehr betragen kann. Grundsätzlich ist die Erfindung auch in diesen Rotorblattbereichen anwendbar. Bevorzugt zum Einsatz kommt sie jedoch bei Dicken der Profilhinterkante von 10 cm oder weniger.

Bei der Erfindung verlaufen die Borsten der saugseitigen Reihe in Richtung einer Tangente an die Saugseite und die Borsten der druckseitigen Reihe verlaufen in Richtung einer Tangente an die Druckseite. Die jeweiligen Tangenten werden insbesondere im Bereich der Profilhinterkante bzw. an der Profilhinterkante an die Saugseite bzw. die Druckseite angelegt. Werden auch die Borsten mit ihrer Längsrichtung in dieser Richtung angeordnet, setzen die von den Borstenreihen gebildeten aerodynamischen Flächen die betreffenden Seiten des Rotorblatts glatt fort, so dass ein glattes Abströmen über die Profilhinterkante hinaus begünstigt wird. Grundsätzlich ist es nicht notwendig, dass die Borsten mit ihrer Längsrichtung in der von den betreffenden Borstenreihen gebildeten aerodynamischen Fläche liegen. Denkbar ist auch, dass die Borsten durch eine geeignete Variation ihrer Längen in ihrer Gesamtheit die betreffende aerodynamische Fläche bilden. Durch Ausrichtung der Längsrichtung der Borsten in Richtung der gebildeten aerodynamischen Flächen, insbesondere entlang der Strömungsrichtung an diesen aerodynamischen Flächen, wird der gewünschte Effekt jedoch besonders einfach erreicht.

In einer Ausgestaltung weist die Profilhinterkante einen saugseitigen Endpunkt, an dem sie mit der Saugseite zusammentrifft, und einen druckseitigen Endpunkt auf, an dem sie mit der Druckseite zusammentrifft, und die Borsten der saugseitigen Reihe weisen jeweils ein befestigtes Ende auf, das in einem Abstand von 30% der Dicke der Profilhinterkante oder weniger von dem saugseitigen Endpunkt angeordnet ist und/oder die Borsten der druckseitigen Reihe weisen jeweils ein befestigtes Ende auf, das in einem Abstand von 30% der Dicke der Profilhinterkante oder weniger von dem druckseitigen Endpunkt angeordnet ist. In diesem Fall bleibt zwischen den beiden Borstenreihen an der Profilhinterkante ein Freiraum, der mindestens 40% der Dicke der Profilhinterkante ausmacht. Die jeweiligen Borstenreihen sind insgesamt nahe der von ihnen auszubildenden aerodynamischen Flächen an der Profilhinterkante befestigt. Dies begünstigt die Wirkung der Borstenreihen als aerodynamische Flächen. Außerdem wird bei senkrecht zu den gebildeten aerodynamischen Flächen auftretenden Strömungen eine Verformung der Borstenreihen in der gewünschten Weise begünstigt.

In einer Ausgestaltung sind freie Enden der Borsten der saugseitigen Reihe nahe von freien Enden der Borsten der druckseitigen Reihe angeordnet, so dass die von den Borsten gebildeten aerodynamischen Flächen entlang einer Hinterkante zusammenlaufen. Dass die freien Enden der genannten Borsten nahe voneinander angeordnet sind, bedeutet, dass die freien Enden sich entweder zumindest teilweise unmittelbar berühren, oder das lediglich geringe Abstände zwischen den freien Enden der Borsten vorhanden sind. Die Abstände können beispielsweise das 10fache eines Borstendurchmessers oder 20% der durchschnittlichen Länge der Borsten nicht übersteigen. Dadurch sind die beiden von den beiden Bostenreihen gebildeten aerodynamischen Flächen im Wesentlichen zu einer einzigen dünnen Hinterkante zusammengeführt und das Windenergieanlagenrotorblatt weist bei regulärer Strömungsrichtung vergleichbare aerodynamische Eigenschaften auf wie ein herkömmliches Rotorblatt mit dünner Hinterkante.

In einer Ausgestaltung sind die Längen der Borsten so bemessen, dass sich die Borsten der saugseitigen Reihe und/oder die Borsten der druckseitigen Reihe mit zunehmendem Abstand von der Profilhinterkante ausdünnen. Mit anderen Worten verringert sich die Anzahl der benachbart angeordneten Borsten mit zunehmendem Abstand von der Profilhinterkante. Hierdurch kann eine besonders dünne, von den Borsten gebildete Hinterkante erzielt werden.

In einer Ausgestaltung sind Borsten der saugseitigen Reihe und/oder Borsten der druckseitigen Reihe in gelenkig mit der Profilhinterkante verbundenen Körpern gehalten. Grundsätzlich können die einzelnen Borsten auf beliebige Art und Weise an dem Windenergieanlagenrotorblatt befestigt sein, beispielsweise durch unmittelbares Verkleben der Borsten mit einer den jeweiligen Abstand der Profilhinterkante bildenden Halbschale des Rotorblatts, oder durch Einfassen oder Einlassen der Borsten in die betreffende Halbschale. Alternativ können mehrere Borsten, insbesondere zu Bündeln zusammengefasst, in oder an einem Grundkörper befestigt werden, vergleichbar mit einem Bürstenkopf. Der Grundkörper kann dann seinerseits mit den übrigen Komponenten des Rotorblatts verbunden werden, beispielsweise durch Verschrauben oder Verkleben, insbesondere mit einer der Halbschalen. Bei der genannten Ausgestaltung wird ein derartiger Körper, in dem mindestens ein Teil der Borsten einer der beiden Reihen gehalten ist, gelenkig mit der Profilhinterkante verbunden. Dies ermöglicht ein Einklappen der Borsten aus ihrer die Druckseite bzw. die Saugseite fortsetzenden Stellung beispielsweise in eine Stellung, in der sie auf der Druckseite bzw. auf der Saugseite des Rotorblatts aufliegen. Ein solches Einklappen der Borsten kann beispielsweise zu Transportzwecken hilfreich sein. Außerdem kann durch die gelenkige Verbindung der Winkel, in dem die Borsten und damit die von den Borsten gebildeten aerodynamischen Flächen relativ zu den übrigen Komponenten des Rotorblatts ausgerichtet sind, variiert und den Anforderungen angepasst werden.

In einer Ausgestaltung weist mindestens ein Teil der Borsten einen flachen Querschnitt auf. Grundsätzlich können die Borsten einen beliebigen Querschnitt aufweisen, insbesondere kreisförmig oder quadratisch sein. Im Querschnitt flache Borsten, insbesondere mit rechteckigem, ovalem oder elliptischem Querschnitt, können bei geeigneter Anordnung die angestrebte Wirkung als aerodynamische Fläche einfacher erreichen oder bevorzugt in bestimmten Richtungen einfacher verformbar sein als in anderen. Beispielsweise kann der breitere Teil des Querschnitts der Borsten in Richtung der betreffenden Borstenreihe ausgerichtet werden, so dass eine Breitseite der Borsten der auszubildenden aerodynamischen Fläche zugewandt ist.

In einer Ausgestaltung ist mindestens ein Teil der Borsten jeweils um eine Drehachse drehbar gelagert, wobei die Drehachse gegenüber einer Mittellängsachse der jeweiligen Borste parallel versetzt angeordnet ist. Beispielsweise kann der Querschnitt einer in einem Längsabschnitt flachen Borste in Richtung zu einem Befestigungspunkt hin variieren und sich auf einen beispielsweise kreisförmigen Querschnitt reduzieren, der gegenüber der Mitte des flachen Querschnitts versetzt angeordnet ist. Der Teil der Borste mit dem seitlich versetzten, kreisförmigen Querschnitt kann bei einer entsprechenden Anströmung des flachen Längsabschnitts der Borste eine Torsionsbewegung ausführen und somit als drehbares Lager wirken. Denkbar ist auch der Einsatz gesonderter Lagerelemente, etwa einer Stahlfeder, an der die Borste befestigt ist. Die flachen Borsten können auch einen relativ großen Querschnitt aufweisen und etwa lamellenartig ausgebildet sein. Durch die skizzierte drehbare Lagerung können sich die von den Borsten gebildeten aerodynamischen Flächen bei einer von der normalen Strömungsrichtung abweichenden Anströmung durch ein Verdrehen der Borsten öffnen, so dass sie nicht länger als annähernd geschlossene aerodynamische Fläche wirken. Dadurch kann die Belastung des Rotorblatts insbesondere bei starken Böen reduziert werden.

In einer Ausgestaltung ist mindestens ein Teil der Borsten austauschbar. Beispielsweise können die Borsten in Grundkörpern eingefasst oder auf sonstige Art befestigt sein, die gemeinsam mit den daran befestigten Borsten austauschbar sind. Auch ein Austausch einzelner Borsten ist denkbar. Durch diese Ausgestaltung können Rotorblätter mit beschädigten Borsten einfach instandgesetzt werden.

In einer Ausgestaltung weist mindestens ein Teil der Borsten jeweils mindestens zwei Längsabschnitte mit unterschiedlicher Elastizität auf, wobei ein elastischerer Abschnitt an einem befestigten Ende und ein steiferer Abschnitt an einem freien Ende der jeweiligen Borste angeordnet ist. Auf diese Weise wird insbesondere bei längeren Borsten eine vergleichsweise ebene aerodynamische Fläche ausgebildet und die Borsten können gleichzeitig bei Schräganströrriung die gewünschte Bewegung ausführen.

Die Erfindung wird nachfolgend anhand eines in Figuren dargestellten Ausführungsbeispiels näher erläutert. Es zeigen:
- Fig. 1: ein erfindungsgemäßes Rotorblatt in einer Draufsicht,
- Fig. 2: einen Querschnitt durch das Rotorblatt aus Fig. 1 entlang der mit A-A bezeichneten Ebene,
- Fig. 3: eine Ausschnittsvergrößerung der Fig. 2,
- Fig. 4: einen der Fig. 3 entsprechenden Ausschnitt eines anderen Rotorblatts,
- Fig. 5: einen weiteren, der Fig. 3 entsprechenden Ausschnitt eines Rotorblatts mit gelenkig befestigten Grundkörpern,
- Fig. 6: einen weiteren, der Fig. 3 entsprechenden Ausschnitt eines Rotorblatts mit Borsten, die Längsabschnitte unterschiedlicher Elastizität aufweisen,
- Fig. 7: eine Draufsicht auf einen Ausschnitt einer Saugseite mit einer saugseitigen Borstenreihe, und
- Fig. 8: eine der Borsten aus Fig. 7 in einer Draufsicht von der Profilhinterkante aus.

Alle Figuren sind schematisch. Für sich entsprechende Bestandteile der unterschiedlichen Ausführungsbeispiele werden dieselben Bezugszeichen verwendet.

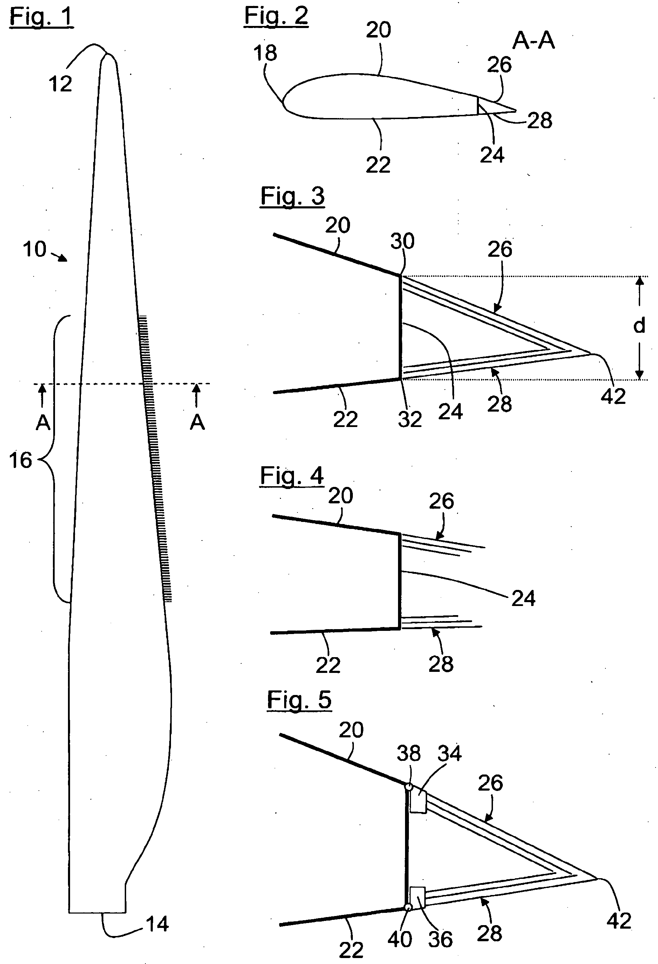

Fig. 1 zeigt ein Windenergieanlagenrotorblatt 10 mit einer Blattspitze 12 und einer Blattwurzel 14. In einem Längsabschnitt 16 weist das Rotorblatt ein aerodynamisches Profil auf, dessen Merkmale anhand der Fig. 2, die einen Querschnitt beispielhaft an der mit A-A bezeichneten Position des Rotorblatts 10 zeigt, erläutert.

Das aerodynamische Profil der Fig. 2 hat eine Profilnasenkante 18, eine Saugseite 20, eine Druckseite 22 und eine dicke Profilhinterkante 24. Die Dicke der Profilhinterkante 24 beträgt 3 mm oder mehr, im dargestellten Beispiel ungefähr 20 mm. An der Profilhinterkante 24 sind Borsten angeordnet, und zwar in einer saugseitigen Reihe 26 und einer druckseitigen Reihe 28. Diese Reihen verlaufen in Längsrichtung des Windenergieanlagenrotorblatts 10 und sind in der Fig. 2 im Querschnitt gezeigt. Die einzelnen Borsten der saugseitigen Reihe 26 und der druckseitigen Reihe 28 verlaufen jeweils ungefähr in Verlängerung der Profiloberfläche des gezeigten Querschnitts. In dieser Querschnittsebene verläuft im regulären Betrieb des Rotorblatts 10 auch die Strömung.

Fig. 3 zeigt eine Ausschnittsvergrößerung der Fig. 2 umfassend einen hinteren Abschnitt der Saugseite 20 und der Druckseite 22 sowie die Profilhinterkante 24 und die saugseitige Reihe 26 und druckseitige Reihe 28 der Borsten. Die Figur zeigt schematisch die Anordnung einzelner Borsten innerhalb der genannten Borstenreihen. Gut erkennbar ist, dass die Gesamtheit der Borsten der saugseitigen Reihe 26 eine aerodynamische Fläche bildet, die die Saugseite 20 nach hinten glatt fortsetzt. Ebenso bildet die Gesamtheit der Borsten der druckseitigen Reihe 28 eine aerodynamische Fläche, die die Druckseite 22 nach hinten glatt fortsetzt.

Die einzelnen Borsten weisen jeweils ein befestigtes Ende auf, das an der Profilhinterkante 24 befestigt ist, und ein freies Ende.

Freie Enden der Borsten der saugseitigen Reihe 26 sind nahe vom freien Ende der Borsten der druckseitigen Reihe 28 angeordnet, so dass die von den Borsten gebildeten aerodynamischen Flächen entlang einer Hinterkante 42 zusammenlaufen. In der Figur ist ebenfalls angedeutet, dass die freien Enden einzelner Borsten einander berühren oder jedenfalls in einem geringen Abstand voneinander angeordnet sind.

Außerdem ist in der Fig. 3 erkennbar, dass die Profilhinterkante 24 einen saugseitigen Endpunkt 30, an dem sie mit der Saugseite 20 zusammentrifft, und einen druckseitigen Endpunkt 32, an dem sie mit der Druckseite 22 zusammentrifft, aufweist. Die befestigten Enden der Borsten der saugseitigen Reihe 26 sind in einem geringen Abstand von dem saugseitigen Endpunkt 30 an der Profilhinterkante 24 befestigt. Ebenso sind die befestigten Enden der Borsten der druckseitigen Reihe 28 in einem geringen Abstand vom druckseitigen Endpunkt 32 an der Profilhinterkante 24 befestigt. Zwischen den Bereichen, in denen die Borsten an der Profilhinterkante 24 befestigt sind, weist die Profilhinterkante 24 einen mittleren Abschnitt auf, an dem keine Borsten angeordnet sind. Die Dicke der Profilhinterkante 24 ist mit d bezeichnet.

Die Fig. 4 zeigt ein weiteres Ausführungsbeispiel, bei dem die von der saugseitigen Reihe 26 gebildete aerodynamische Fläche und die von der druckseitigen Reihe 28 gebildete aerodynamische Fläche nicht zu einer dünnen Hinterkante zusammenlaufen, sondern bei der die freien Enden der betreffenden Borsten in einem größeren Abstand voneinander angeordnet sind. Bei dieser Anordnung, die insbesondere für sehr große Dicken der Profilhinterkante 24 geeignet ist, bei denen ein Zusammenführen der saugseitigen Reihe 26 und der druckseitigen Reihe 28 zu einer gemeinsamen Hinterkante womöglich problematisch ist, kann zumindest der Hinterkantenlärm reduziert werden, während eine deutliche Verringerung des durch die dicke Profilhinterkante 24 bedingten erhöhten Duckwiderstands in der Regel nicht erreicht werden kann.

Das weitere Ausführungsbeispiel der Fig. 5 zeigt von einer saugseitigen Reihe 26 und einer druckseitigen Reihe 28 gebildete aerodynamische Flächen, deren Anordnung derjenigen der Fig. 3 entspricht. Im Unterschied zur Fig. 3 ist gezeigt, dass die Borsten der genannten Borstenreihen jeweils in einem Grundkörper 34 bzw. 36 eingefasst sind. Die Grundkörper 36, 34 sind jeweils über eine gelenkige Verbindung 38, 40 an den übrigen Bestandteilen des Windenergieanlagenrotorblatts befestigt. Auf diese Weise können die Winkelstellungen der saugseitigen Reihe 26 und der druckseitigen Reihe 28 gesteuert werden. Auch ein vollständiges Umklappen der genannten Borstenreihen ist möglich, beispielsweise zu Transportzwecken.

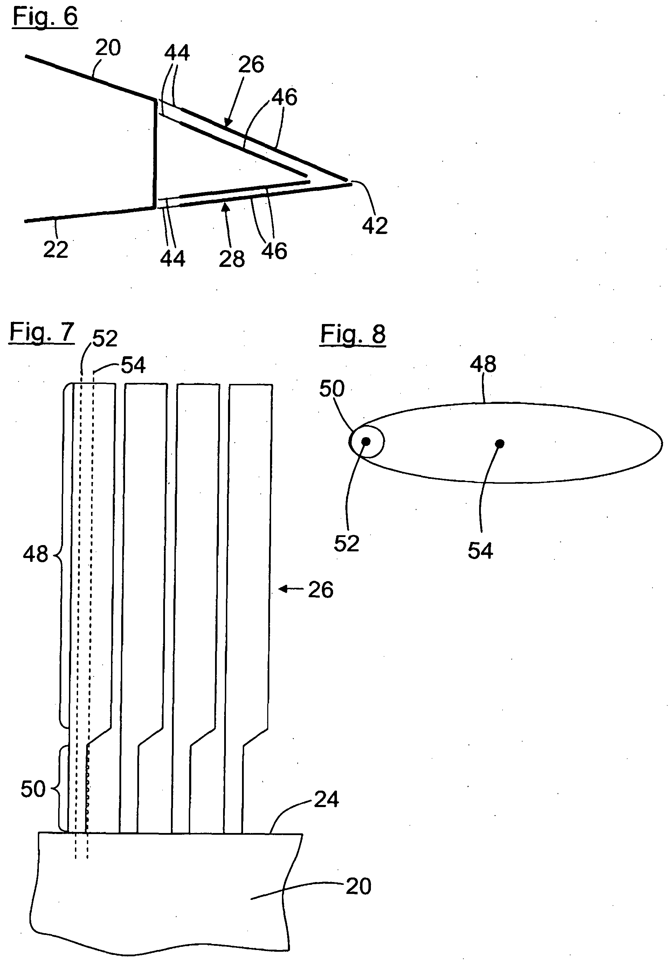

Die Fig. 6 zeigt ein weiteres Ausführungsbeispiel mit einer saugseitigen Borstenreihe 26 und einer druckseitigen Borstenreihe 28. Die Borsten weisen jeweils zwei unterschiedliche Längsabschnitte auf. Ein elastischerer Abschnitt 44 ist am befestigten Ende und ein steiferer Abschnitt 46 am freien Ende der jeweiligen Borste angeordnet.

Fig. 7 zeigt einen Ausschnitt einer Saugseite 20 eines weiteren Ausführungsbeispiels. Die Profilhinterkante 24 verläuft senkrecht zur Zeichenebene. Weiterhin sichtbar sind die Borsten einer saugseitigen Borstenreihe 26. Jede der Borsten weist in einem Längsabschnitt 48, der von der Profilhinterkante 24 entfernt angeordnet ist, einen flachen Querschnitt auf. In Richtung zur Profilhinterkante 24 hin verjüngt sich dieser flache Querschnitt bis zu einem in dem Längsabschnitt 50 ausgebildeten kreisförmigen Querschnitt. Der Längsabschnitt 50 mit kreisförmigem Querschnitt wirkt wie eine Torsionsfeder, so dass die Borsten um die Drehachse 52 herum drehbar gelagert sind. Die Drehachse 52 befindet sich parallel versetzt in einem Abstand von einer Mittellängsachse 54 der jeweiligen Borste.

Die Anordnung der Drehachse 52 und der Mittellängsachse 54 bezüglich der in den beiden Längsabschnitten 48, 50 ausgebildeten, unterschiedlichen Querschnitte der Borste sind in der Fig. 8 dargestellt.

### Liste der verwendeten Bezugszeichen:

- 10: Windenergieanlagenrotorblatt
- 12: Blattspitze
- 14: Blattwurzel
- 16: Längsabschnitt
- 18: Profilnasenkante
- 20: Saugseite
- 22: Druckseite
- 24: Profilhinterkante
- 26: saugseitige Reihe
- 28: druckseitige Reihe
- 30: saugseitiger Endpunkt
- 32: druckseitiger Endpunkt
- 34, 36: Grundkörper
- 38, 40: gelenkige Verbindung
- 42: Hinterkante
- 44: elastischerer Abschnitt
- 46: steiferer Abschnitt
- 48: Längsabschnitt mit flachem Querschnitt
- 50: Längsabschnitt mit kreisförmigem Querschnitt
- 52: Drehachse
- 54: Mittellängsachse
- d: Dicke der Profilhinterkante

## Patentansprüche

1. Windenergieanlagenrotorblatt (10) mit einem aerodynamischen Profil, das in einem Längsabschnitt (16) des Rotorblatts ausgebildet ist, eine Druckseite (22), eine Saugseite (20), eine Profilnasenkante (18) und eine Profilhinterkante (24) mit einer Dicke von 3 mm oder mehr sowie eine Vielzahl von an der Profilhinterkante (24) angeordneten Borsten aufweist, **dadurch gekennzeichnet, dass** die Borsten in einer saugseitigen Reihe (26) und in einer druckseitigen Reihe (28) angeordnet sind, wobei die saugseitige Reihe (26) eine aerodynamische Fläche bildet, die die Saugseite (20) glatt fortsetzt, die druckseitige Reihe (28) eine aerodynamische Fläche bildet, die die Druckseite (22) glatt fortsetzt, und die Borsten der saugseitigen Reihe (26) in Richtung einer Tangente an die Saugseite (20) und die Borsten der druckseitigen Reihe (28) in Richtung einer Tangente an die Druckseite (22) verlaufen.

2. Windenergieanlagenrotorblatt (10) nach Anspruch 1, **dadurch gekennzeichnet, dass** die Dicke (d) der Profilhinterkante (24) 10 cm oder weniger beträgt.

3. Windenergieanlagenrotorblatt (10) nach einem der Ansprüche 1 bis 2, **dadurch gekennzeichnet, dass** die Profilhinterkante (24) einen saugseitigen Endpunkt (30), an dem sie mit der Saugseite (20) zusammentrifft, und einen druckseitigen Endpunkt (32), an dem sie mit der Druckseite (22) zusammentrifft, aufweist und die Borsten der saugseitigen Reihe (26) jeweils ein befestigtes Ende aufweisen, das in einem Abstand von 30 % der Dicke (d) der Profilhinterkante (24) oder weniger von dem saugseitigen Endpunkt (30) angeordnet ist und/oder die Borsten der druckseitigen Reihe (28) jeweils ein befestigtes Ende aufweisen, das in einem Abstand von 30 % der Dicke (d) der Profilhinterkante (24) oder weniger von dem druckseitigen Endpunkt (32) angeordnet ist.

4. Windenergieanlagenrotorblatt (10) nach einem der Ansprüche 1 bis 3, **dadurch gekennzeichnet, dass** freie Enden der Borsten der saugseitigen Reihe (26) nahe von freien Enden der Borsten der druckseitigen Reihe (28) angeordnet sind, so dass die von den Borsten gebildeten aerodynamischen Flächen entlang einer Hinterkante (42) zusammenlaufen.

5. Windenergieanlagenrotorblatt (10) nach einem der Ansprüche 1 bis 4, **dadurch gekennzeichnet, dass** Längen der Borsten so bemessen sind, dass sich die Borsten der saugseitigen Reihe (26) und/oder die Borsten der druckseitigen Reihe (28) mit zunehmendem Abstand von der Profilhinterkante (24) ausdünnen.

6. Windenergieanlagenrotorblatt (10) nach einem der Ansprüche 1 bis 5, **dadurch gekennzeichnet, dass** Borsten der saugseitigen Reihe (26) und/oder Borsten der druckseitigen (28) Reihe in gelenkig mit der Profilhinterkante (24) verbundenen Grundkörpern (34, 36) gehalten sind.

7. Windenergieanlagenrotorblatt (10) nach einem der Ansprüche 1 bis 6, **dadurch gekennzeichnet, dass** mindestens ein Teil der Borsten einen flachen Querschnitt aufweist.

8. Windenergieanlagenrotorblatt (10) nach Anspruch 7, **dadurch gekennzeichnet, dass** mindestens ein Teil der Borsten jeweils um eine Drehachse (52) drehbar gelagert ist, wobei die Drehachse (52) gegenüber einer Mittellängsachse (54) der jeweiligen Borste parallel versetzt angeordnet ist.

9. Windenergieanlagenrotorblatt (10) nach einem der Ansprüche 1 bis 8, **dadurch gekennzeichnet, dass** mindestens ein Teil der Borsten austauschbar ist.

10. Windenergieanlagenrotorblatt (10) nach einem der Ansprüche 1 bis 9, **dadurch gekennzeichnet, dass** mindestens ein Teil der Borsten jeweils mindestens zwei Längsabschnitte mit unterschiedlicher Elastizität aufweiset, wobei ein elastischerer Abschnitt (44) am befestigten Ende und eine steiferer Abschnitt (46) am freien Ende der jeweiligen Borste angeordnet ist.

## Claims

1. A wind turbine rotor blade (10) having an aerodynamic profile which is formed in a longitudinal section (16) of the rotor blade and which has a pressure side (22), a suction side (20), a profile leading edge (18) and a profile trailing edge (24) having a thickness of 3 mm or greater, and which has a plurality of bustles arranged on the profile trailing edge (24), **characterized in that** the bristles are arranged in a suction-side row (26) and in a pressure-side row (28), wherein the suction-side row (26) forming an aerodynamic surface which forms a smooth continuation of the suction side (20), and the pressure-side row (28) forming an aerodynamic surface which forms a smooth continuation of the pressure side (22), and the bristles of the suction-side row (26) run in the direction of a tangent to the suction side (20), and the bristles of the pressure-side row (28) run in the direction of a tangent to the pressure side (22).

2. The wind turbine rotor blade (10) according to claim 1, **characterized in that** the thickness (d) of the profile trailing edge (24) is 10 cm or less.

3. The wind turbine rotor blade (10) according to one of claims 1 to 2, **characterized in that** the profile trailing edge (24) has a suction-side end point (30), at which it meets the suction side (20), and a pressure-side end point (32), at which it meets the pressure side (22), and the bustles of the suction-side row (26) each have one fastened end which is arranged at a distance of 30% of the thickness (d) of the profile trailing edge (24) or less from the suction-side end point (30) and/or the bristles of the pressure-side row (28) each have one fastened end which is arranged at a distance of 30% of the thickness (d) of the profile trailing edge (24) or less from the pressure-side end point (32).

4. The wind turbine rotor blade (10) according to one of claims 1 to 3, **characterized in that** free ends of the bustles of the suction-side row (26) are arranged close to free ends of the bustles of the pressure-side row (28), so that the aerodynamic surfaces formed by the bristles converge along a trailing edge (42).

5. The wind turbine rotor blade (10) according to one of claims 1 to 4, **characterized in that** lengths of the bustles are dimensioned such that the bristles of the suction-side row (26) and/or the bristles of the pressure-side row (28) taper out with increasing distance from the profile trailing edge (24).

6. The wind turbine rotor blade (10) according to one of claims 1 to 5, **characterized in that** bustles of the suction-side row (26) and/or bristles of the pressure-side row (28) are held in base bodies (34, 36) which are articulatedly connected to the profile trailing edge (24).

7. The wind turbine rotor blade (10) according to one of claims 1 to 6, **characterized in that** at least a subset of the bristles has a flat cross section.

8. The wind turbine rotor blade (10) according to claim 7, **characterized in that** at least a subset of the bristles is mounted so that each bristle thereof is rotatable about an axis of rotation (52), the axis of rotation (52) being arranged so as to be offset with respect to and parallel to a central longitudinal axis (54) of the respective bristle.

9. The wind turbine rotor blade (10) according to one of claims 1 to 8, **characterized in that** at least a subset of the bristles is exchangeable.

10. The wind turbine rotor blade (10) according to one of claims 1 to 9, **characterized in that**, in at least a subset of the bustles, each bustle has at least two longitudinal sections of different elasticity, a more elastic section (44) being arranged at the fastened end and a more rigid section (46) being arranged at the free end of the respective bristle.

## Revendications

1. Pale de rotor d'éolienne (10) dotée d'un profil aérodynamique formé dans une section longitudinale (16) de la pale de rotor, un côté pression (22), un côté aspiration (20), un bord d'attaque de profil (18) et un bord de fuite de profil (24) avec une épaisseur de 3 mm ou plus, ainsi que d'une pluralité de poils agencés sur le bord de fuite de profil (24), **caractérisée en ce que** les poils sont agencés dans une rangée côté aspiration (26) et une rangée côté pression (28), la rangée côté aspiration (26) formant une surface aérodynamique prolongeant le côté aspiration (20) de façon lisse, la rangée côté pression (28) formant une surface aérodynamique prolongeant le côté pression (22) de façon lisse, et les poils de la rangée côté aspiration (26) s'étendant dans la direction d'une tangente au côté aspiration (20) et les poils de la rangée côté pression (28) s'étendant dans la direction d'une tangente au côté pression (22).

2. Pale de rotor d'éolienne (10) selon la revendication 1, **caractérisée en ce que** l'épaisseur (d) du bord de fuite de profil (24) mesure 10 cm ou moins.

3. Pale de rotor d'éolienne (10) selon l'une des revendications 1 à 2, **caractérisée en ce que** le bord de fuite de profil (24) présente un point final côté aspiration (30), où il rencontre le côté aspiration (20), et un point final côté pression (32), où il rencontre le côté pression (22), et les poils de la rangée côté aspiration (26) présentent respectivement une extrémité fixée disposée à une distance égale à 30% de l'épaisseur (d) du bord de fuite de profil (24) ou moins par rapport au point final côté aspiration (30), et/ou les poils de la rangée côté pression (28) présentent respectivement une extrémité fixée disposée à une distance égale à 30% de l'épaisseur (d) du bord de fuite de profil (24) ou moins par rapport au point final côté pression (32).

4. Pale de rotor d'éolienne (10) selon l'une des revendications 1 à 3, **caractérisée en ce que** des extrémités libres des poils de la rangée côté aspiration (26) sont agencées à proximité d'extrémités libres des poils de la rangée côté pression (28), de telle façon que les surfaces aérodynamiques formées par les poils convergent le long d'un bord de fuite (42).

5. Pale de rotor d'éolienne (10) selon l'une des revendications 1 à 4, **caractérisée en ce que** des longueurs des poils sont dimensionnées de manière à ce que les poils de la rangée côté aspiration (26) et/ou les poils de la rangée côté pression (28) s'affinent avec un espacement croissant par rapport au bord de fuite de profil (24).

6. Pale de rotor d'éolienne (10) selon l'une des revendications 1 à 5, **caractérisée en ce que** des poils de la rangée côté aspiration (26) et/ou des poils de la rangée côté pression (28) sont maintenus dans des corps de base (34, 36) reliés de façon articulée au bord de fuite de profil (24).

7. Pale de rotor d'éolienne (10) selon l'une des revendications 1 à 6, **caractérisée en ce qu'**au moins une partie des poils présente une section transversale plate.

8. Pale de rotor d'éolienne (10) selon la revendication 7, **caractérisée en ce qu'**au moins une partie des poils est montée de façon rotative respectivement autour d'un axe de rotation (52), l'axe de rotation (52) étant agencé de façon parallèlement décalée par rapport à un axe longitudinal médian (54) du poil respectif.

9. Pale de rotor d'éolienne (10) selon l'une des revendications 1 à 8, **caractérisée en ce qu'**au moins une partie des poils est remplaçable.

10. Pale de rotor d'éolienne (10) selon l'une des revendications 1 à 9, **caractérisée en ce qu'**au moins une partie des poils présente respectivement au moins deux sections longitudinales avec une élasticité différente, une section plus élastique (44) étant agencée à l'extrémité fixée, et une section plus rigide (46) étant agencée à l'extrémité latérale du poil respectif.
